# EUROPEAN PATENT APPLICATION

(11) **EP 2 905 687 A1**
(43) Date of publication of application: **12.08.2015**
(21) Application number: 15154412.9
(22) Date of filing: 10.02.2015
(51) Int. Cl.: G06F 3/0482, G06F 3/0485, G06F 3/0488

(54) **Structure aware navigation method using space and structure mapping between input device and digital data**

(30) Priority: 10.02.2014 KR 20140014660
(71) Applicant: Korea Advanced Institute of Science and Technology, Daejeon 305-701 (KR)
(72) Inventor: Lee, Gee Hyuk, Daejeon, 305-701 (KR); Kim, Do Hyung, Cheongju-si, Chungcheongbuk-do 363-951 (KR)
(74) Representative: Schaumburg & Partner Patentanwälte (GbR)

(57) **Abstract**

Disclosed is a structure aware navigation method using a user input space and structure mapping between an input device and digital data. A user interface method executed by a computer includes steps of: mapping between a user input space of an input unit and a hierarchical structure of digital data; and recognizing a layer corresponding to the user input space and performing data navigation.

## Description

### CROSS-REFERENCE TO RELATED APPLICATIONS

A claim for priority under 35 U.S.C. § 119 is made to Korean Patent Application No. 10-2014-0014660 filed February 10, 2014, in the Korean Intellectual Property Office, the entire contents of which are hereby incorporated by reference.

### BACKGROUND

The inventive concepts described herein relate to a technology about user interface and user experience for more easily intuitively navigating structured information in computing environments.

Nowadays, most users are usually manipulating shortcut keys, menus, perspective windows, or scroll bars in order to navigate or browse between multiplicities of digital data, or navigate in digital data having several subelements. Digital data with subelements are generally applicable to document edition, e-books, web pages, digital music albums, digital images/motion pictures, and so on.

Shortening keys have been conventionally used are disadvantageous in that they must be accompanied with users' memory. As many as the number of digital data or subelements thereof to be navigated, the number of shortening keys to be memorized by users would be increased inevitably. Furthermore, some mobile terminals such as tablets or portable phones are not available with such shortening keys, or inconvenient in using them.

Disadvantages of menus and perspective windows are first to necessitate special screen spaces. Mobile terminals such as tablets or portable phones are limitative to screen areas therein, so that specially allocating screen spaces for menus and perspective windows may be impossible or may cause main screen areas to be reduced to degrade the usability. There has been disclosed a foregoing study that showed how the switchover of windows or screens could degrade user's recognition ability if an additional window is used therein. Second, manipulating menus and perspective windows also needs users' attention. When mobile terminals are used in mobile computing environments, users' attention may act as functionally important resources. But such attention of users for interfacing between menus and perspective windows could cause the users even to be dangerous while walking or driving.

Scroll bars have also disadvantages. First, it is unavailable to support navigation in structured information. That is, since the scroll bars are oriented merely to support linear navigation, it is impossible to use structured information therewith. Second, there is a limit to resolution. For instance, in case that the number of image pixels is 100 and the total number of navigation field items is 10,000, the scroll bar is incompetent to deal with items lower than 100 figures because one pixel is engaged with 100 items.

Therefore, it needs an interface rendering a user to easily manipulate a mobile terminal even without his memory and a special menu or window, use structured information, and be free from a limit to resolution therein.

### SUMMARY

Embodiments of the inventive concept are directed to, on purpose to navigate digital data having structured information (hierarchical structure), provide a user interface system and method of allowing a user to easily manipulate a mobile terminal even without his memory and a specific screen area or window, and be free from a limit to resolution therein, less requiring the user's attention.

A user interface method executed by a computer may include the steps of: mapping between a user input space of an input unit and a hierarchical structure of digital data; and recognizing a layer corresponding to the user input space and performing data navigation.

According to an aspect of the inventive concept, the hierarchical structure of the digital data may be formed of two or more depths. The user input space may be divided into two or more fields in accordance with the hierarchical structure of the digital data. The step of mapping between the user input space of the input unit and the hierarchical structure of the digital data may be to respectively match depths of the hierarchical structure with the divided fields of the user input space.

According to another aspect, the user input space may be divided into two or more columns, or two or more rows in accordance with a navigation axis of a user's input.

According to still another aspect, the step of recognizing the layer corresponding to the user input space and the performing of the data navigation may be to perform the data navigation in the layer corresponding to one of fields in regard to a user's input that is introduced in the one of the fields of the user input space.

According to further still another aspect, the step of recognizing the layer corresponding to the user input space and performing the data navigation may be to perform linear navigation of the digital data in regard to a user's input that is introduced in a field out of the hierarchical structure.

A user interface system may include: a memory in which at least one program is loaded; and at least one processor. The at least one processor may process, under control of the program, to process, the steps of mapping between a user input space of an input unit and an hierarchical structure of digital data; and recognizing a layer corresponding to the user input space and performing data navigation.

According to embodiments of the inventive concept, relative to a prior art, it may be operable without a specific screen area or window, less depending on a user's memory and less requiring a user's attention.

According to embodiments of the invention concept, relative to linear navigation, the structure aware navigation needs the least amount of a user's input equal to or smaller than that of the linear navigation in moving to a user's desired location. Therefore, it may be accomplishable of fast navigation between and within data.

### BRIEF DESCRIPTION OF THE FIGURES

Figs. 1 to 4 exemplarily illustrate interface environments supporting linear navigation of data.
Figs. 5 to 10 exemplarily illustrate interface environments supporting data structure aware navigation in an embodiment of the inventive concept.
Fig. 11 is a flow chart showing a user interface method for data structure aware navigation in an embodiment of the incentive concept.
Fig. 12 is a block diagram exemplarily illustrating an internal configuration of a computer system for data structure aware navigation in accordance with the incentive concept.

### DETAILED DESCRIPTION

Now hereinafter will be described exemplary embodiments of the inventive concept in conjunction with accompanying drawings.

Embodiments of the inventive concept may be concerned in user interfaces for navigating structured information in computing environments, being applicable to all kinds of devices based on users' inputs, e.g. internet TVs, tablets, laptop computers, Digital Multimedia Broadcasting (DMB) terminals, Portable Multimedia Players (PMP), navigation terminals, and so forth.

In description, the term 'digital data' may mean all kinds of data which are regarded as objects or targets to be found, such as documents, e-books, music, images, motion pictures, and so forth.

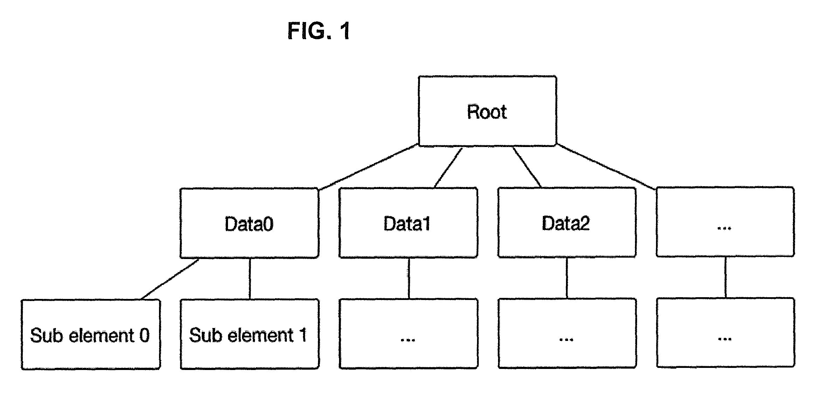

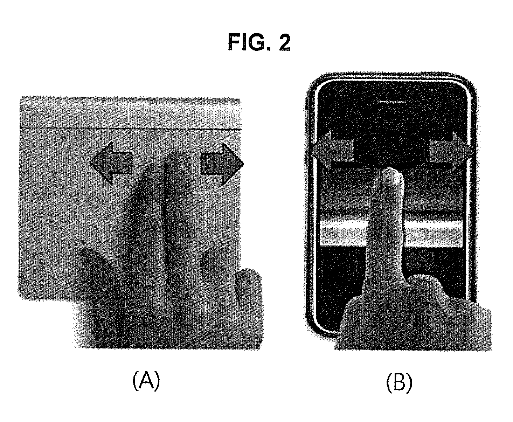

Fig. 1 exemplarily illustrates a hierarchical data structure and Figs. 2A and 2B exemplarily illustrates input units.

It is now assuming that a hierarchical data structure is the same as shown in Fig. 1 and an input is given as shown in Figs. 2A and 2B.

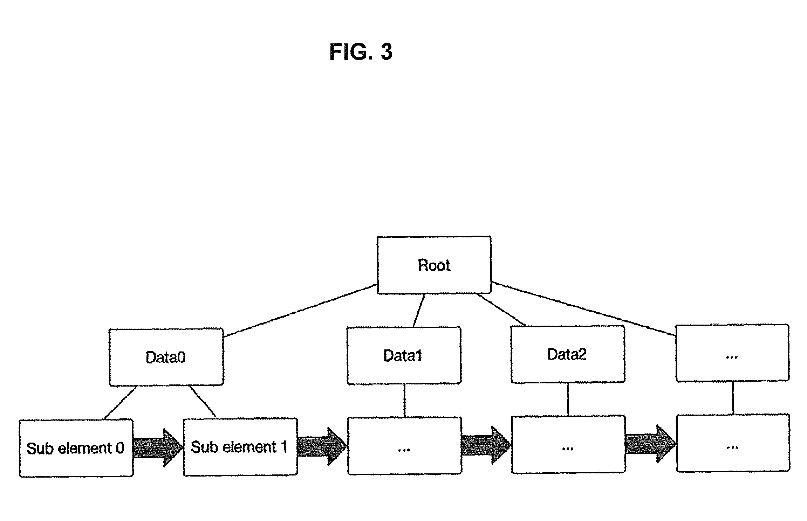

A prior user interface operates to provide data navigation in the manner of shifting between subelements, which are included in digital data Data0, Data1, Data2 ..., in the structure of the digital data as shown in Fig. 3.

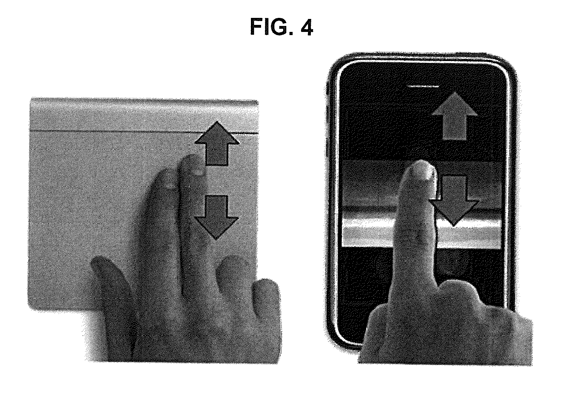

During this, a user's input is provided to a single axis direction in a two or three dimensional space. Depending on a type of materialization, a user's input may be provided not in a horizontal axis mode as like Figs. 2A and 2B but in a vertical axis mode as like Fig. 4.

A prior user interface operates to perform the same data navigation with Fig. 3 even in the vertical-axis input mode as well as the horizontal-axis input mode of Fig. 2. The prior techniques shown in Figs. 1 to 4 are however disabled to perform a function of structure aware navigation for data formed in a hierarchical structure.

Embodiments of the inventive concept may be executed to divide a space of an input unit, and then cope with depths of hierarchical digital-data structure as a target to be navigated by the divided spaces, supporting the structure aware navigation.

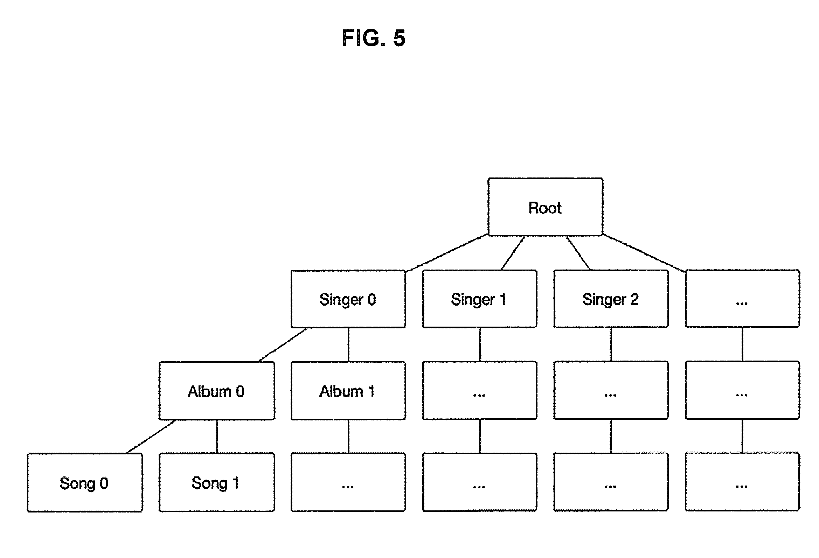

Exemplarily, as for music information, digital data may be structurized in the composition of three layers (Singer, Album, and Song) as shown in Fig. 5.

For hierarchical data navigation, a user input space of an input unit may be divided into two or more fields to match a hierarchical structure of digital data.

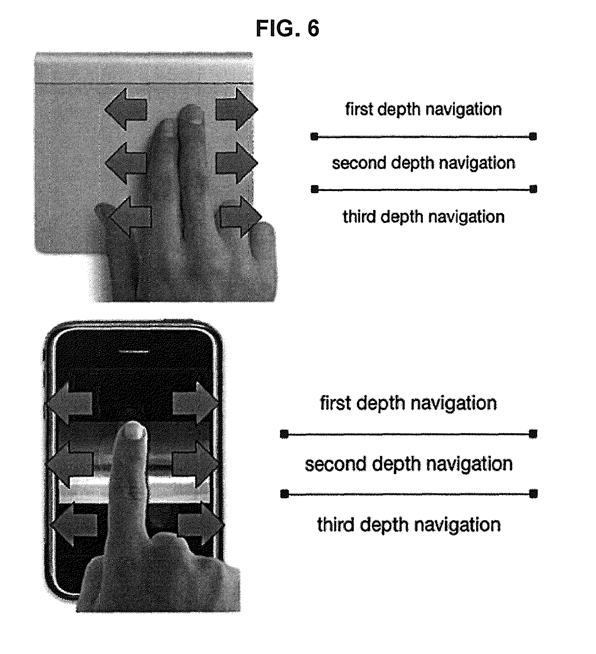

If the main navigation axis for user input is horizontal, a user input space may be divided into two or more rows as shown in Fig. 6.

As can be seen from Fig. 6, in an input unit, a user input space for the hierarchical structure of Fig. 5 maybe divided into three fields, i.e. first, second, and third depth navigation fields.

In this embodiment, by way of matching the divided fields of the input unit with layer depths of digital data, it may be obtained to support the structure aware navigation for the digital data.

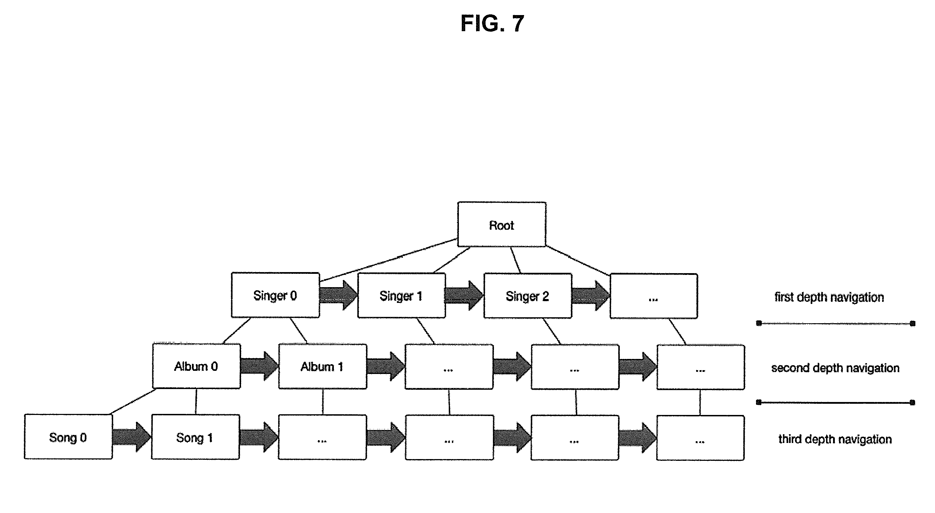

Referring to Fig. 7, it may be allowable to support navigation between Singers through a user's input in the first depth navigation field by way of matching a 'Singer' layer with the first depth navigation field of the input unit, support navigation between Albums through a user's input in the first depth navigation field by way of matching an 'Album' layer with the first depth navigation field of the input unit, and support navigation between Songs through a user's input in the first depth navigation field by way of matching a 'Song' layer with the first depth navigation field of the input unit.

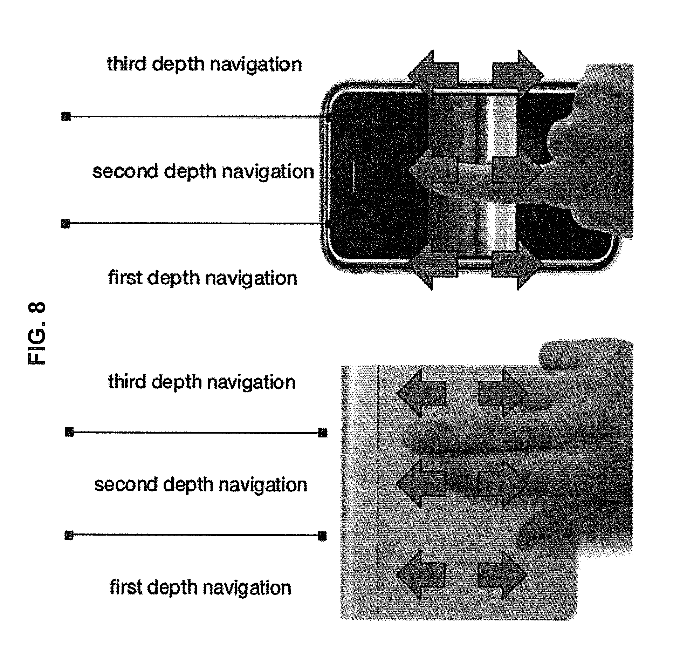

In the meantime, if the main navigation axis for user input is vertical, a user input space may be divided into two or more columns as shown in Fig. 8. This input mode on the vertical axis may be performed to match the divided columns of the user input space with layer depths thereof as aforementioned by Fig. 7.

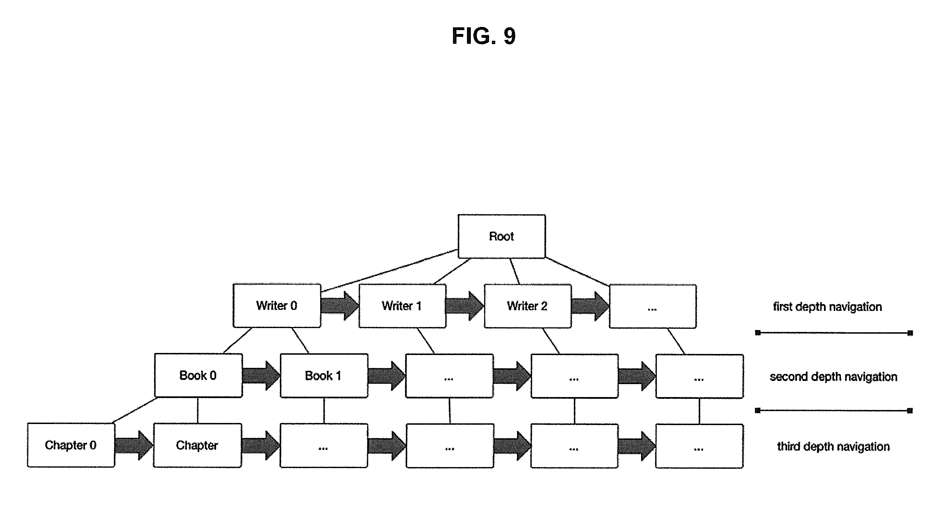

In another embodiment, if target data to be navigated is an e-book, a hierarchical structure for the e-book may be organized of Writers, Books, and Chapters composing the Books. In this case, as shown in Fig. 9, a user input space of the input unit may be divided into three fields in accordance with the hierarchical structure of the e-book. Then, the structure aware navigation for the target e-book may be accomplished by matching the three divided fields with layer depths thereof.

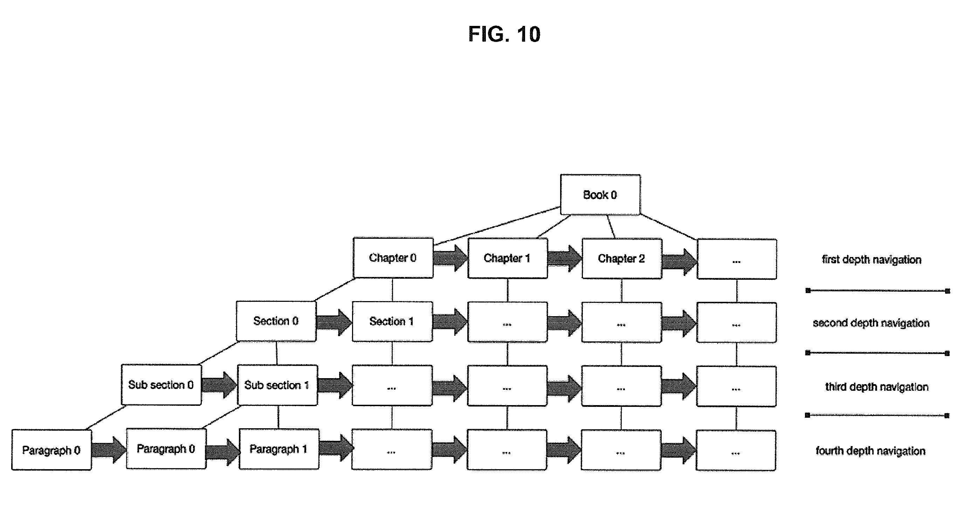

As to the e-book, without restriction to such three layers in structure depth, three or more layers may be available. For example, for an e-book having four layers in depths, its hierarchical structure may be organized as shown in Fig. 10, i.e. Chapters, Sections, Subsections, and Paragraphs. With this hierarchical structure, a user space of the input unit may be divided into such four fields. Then, the structure aware navigation for the e-book may be accomplished by matching the four divided fields with layer depths thereof.

According to the embodiments, the data navigation may be carried out in a corresponding layer depth after finding the layer depth for a signal input from one of navigation fields of the input unit. Additionally, the data navigation may be performed to change layer depths of the hierarchical structure in accordance with a selection of navigation field for a user's input.

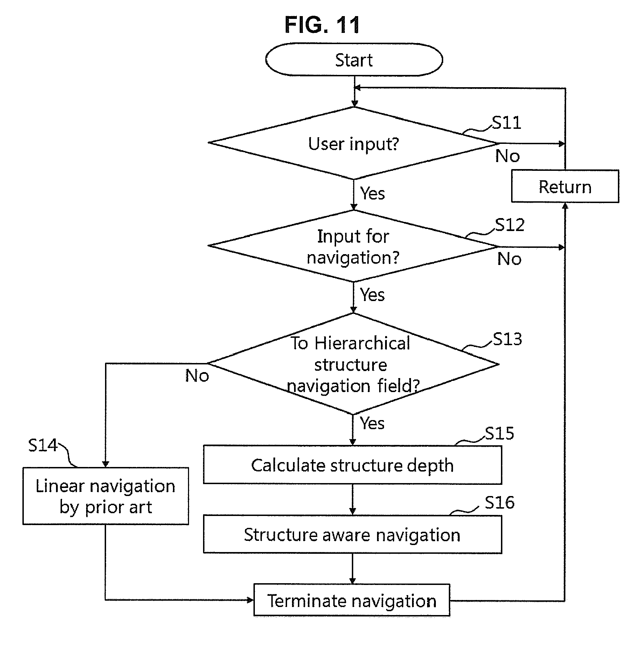

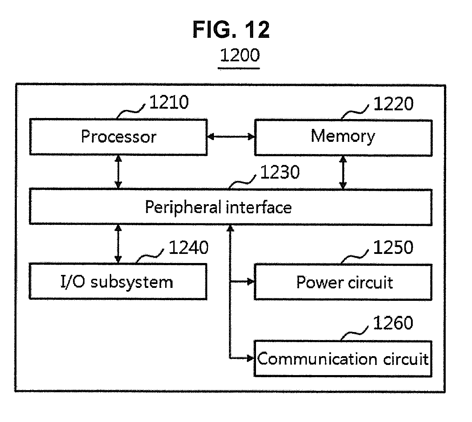

Fig. 11 is a flow chart showing a user interface method for the structure aware navigation to data in an embodiment of the incentive concept. This user interface method may be carried through steps by means of a computer system which will be described with reference to Fig. 12.

If there is a user input through the input unit (e.g. touch screen), the computer system may determine whether the user input corresponds to a navigation instruction for digital data (navigation between or within the digital data) (S12).

In the input unit, a user input space may be divided into a plurality of fields (hierarchical structure navigation fields) in correspondence with a hierarchical structure for selected digital data.

Consequently, if the user input corresponds to a navigation instruction, the computer system may determine whether a location of the user input corresponds to a hierarchical structure navigation field (S13). Unless the location of the user input corresponds to the hierarchical structure navigation filed, it may be allowable to perform linear navigation for the user input (S14).

In the meantime, if the user input location corresponds to the hierarchical structure navigation field, the computer system may calculate a layer depth of the hierarchical structure corresponding to the field where the user input is detected (S15) and perform navigation between data belonging to the layer with the calculated depth for the user input (S16).

Accordingly, a user interface method according to embodiments of the inventive concept may provide data navigation by way of recognizing a hierarchical structure for data organized in the hierarchical structure.

Fig. 12 is a block diagram exemplarily illustrating an internal configuration of a computer system for data structure aware navigation in accordance with an embodiment of the incentive concept. The computer system 1200 may be an internet TV, a smart phone, a tablet, a laptop computer, a DMB terminal, a PMP, a navigation terminal, and so on.

As shown in Fig. 12, the computer system 1200 may include at least a processor 1210, a memory 1220, a peripheral interface 1230, an input/output (I/O) system 1240, a power circuit 1240, and a communication circuit 1260.

This embodiment shown in Fig. 12 is just an example of the computer system 1200. The computer system 1200 may be configured to have an additional component which is not shown in Fig. 12, or have a combination or disposition with two or more components. Especially, a computer system for mobile terminal may include various kinds of sensors (photo sensor, approach sensor, illumination sensor, etc.) in addition to the components shown in Fig. 12. The communication circuit 1260 may include even a circuit for RF communication. Components permissible to be disposed in the computer system 1200 may be implemented in hardware, software, or a combination of hardware and software, including an integrated circuit specified to process at least one or more signals or execute an application.

The memory 1220 may include for example a high-speed random access memory, a magnetic disk, a Static Random Access Memory (SRAM), a Dynamic RAM (DRAM), a Read-Only Memory (ROM), a flash memory, or a nonvolatile memory. The memory 1220 may include a software module, instruction assemblage, or other various data, which is necessary for an operation of the computer system 1200. In this configuration, accessing the memory 1220 from the processor 1210 or the peripheral interface 1230 may be controlled by the processor 1210.

The peripheral interface 1230 may couple peripheral input and/or output units of the computer system 1200 with the processor 1210 and the memory 1220. The processor 1210 may execute software module or instruction assemblage, which is stored in the memory 1220, to complete various functions for the computer system 1200 and process data therein.

The I/O subsystem 1240 may couple various kinds of peripheral input/output units with the peripheral interface 1230. For instance, the I/O subsystem 1240 may include a controller for coupling the peripheral interface 1230 with a peripheral unit such as monitor, keyboard, mouse, if necessary, touch screen, or sensor. According to another aspect of the inventive concept, the peripheral input/output units may be coupled with the peripheral interface 1230 without through the I/O subsystem 1240.

The power circuit 1250 may supply power to all or a part of components of the mobile terminal. For example, the power circuit 1250 may include one or more power supplies such as battery and AC supply, charge system, power failure detection circuit, power converter, inverter, power state indicator, or some other components for generating, managing and distributing power.

The communication circuit 1260 may enable the computer system to communicate with another computer system by way of at least one external port. Otherwise, as aforementioned, the communication circuit 1250 may also include an RF signal to transceive an RF signal, which is known even as an electromagnetic signal, thus enabling the computer system to communicate with another computer system.

Methods according to embodiments of the inventive concept may be implemented in a form of program instructions executable through various types of computer systems, and recorded in a computer readable medium.

A program according to embodiments of the inventive concept may be composed to be PC-based programs or mobile-specific applications. An application for the user interface according to embodiments of the inventive concept may be implemented in a program operating independently, or in an in-app type of a specific application on which the user interface application is operable.

As stated above, the embodiments of the inventive concept, relative to the prior art, may be less dependent upon a user's memory, without a special screen area or window, and less required for a user's attention. Additionally, the embodiments of the inventive concept, providing the structure aware navigation rather than the linear navigation, may need an amount of user input equal at least to or smaller than that of the prior art.

While the inventive concept has been described with reference to exemplary embodiments, those skilled in the art may practice various changes and modifications without departing from the spirit and scope of the inventive concept set forth throughout the annexed claim matters. For instance, there may be attained a desired result according to the inventive concept even though the techniques are carried out through other methods and procedures different from the aforementioned, and/or even though the system, the structure, the units and the circuits are coupled in other manners different from the aforementioned, or substituted or replaced with other components or equivalents.

Therefore, it should be understood that other implementations, embodiments and equivalents involved in the annexed claims may be construed as properly belonging to the territory of the inventive concept.

## Claims

1. A user interface method executed by a computer, the method comprising:
mapping between a user input space of an input unit and an hierarchical structure of digital data; and
recognizing a layer corresponding to the user input space and performing data navigation.

2. The user interface method according to claim 1, wherein the hierarchical structure of the digital data is formed of two or more depths,
wherein the user input space is divided into two or more fields in accordance with the hierarchical structure of the digital data,
wherein the mapping between the user input space of the input unit and the hierarchical structure of the digital data is configured to:
respectively match depths of the hierarchical structure with the divided fields of the user input space.

3. The user interface method according to claim 2, wherein the user input space is divided into two or more columns, or two or more rows in accordance with a navigation axis of a user's input.

4. The user interface method according to claim 2, wherein the recognizing of the layer corresponding to the user input space and the performing of the data navigation is configured to:
perform the data navigation in the layer corresponding to one of fields in regard to a user's input that is introduced in the one of the fields of the user input space.

5. The user interface method according to claim 4, wherein the recognizing the layer corresponding to the user input space and performing the data navigation is configured to:
perform linear navigation of the digital data in regard to a user's input that is introduced in a field out of the hierarchical structure.

6. A computer readable recording medium including an instruction of controlling a computer system to perform data navigation, wherein the instruction controls the computer system by a method comprising:
mapping between a user input space of an input unit and a hierarchical structure of digital data;
recognizing a layer corresponding to the user input space and performing data navigation.

7. A user interface system comprising:
a memory in which at least one program is loaded; and
at least one processor,
wherein the at least one processor is configured, under control of the program, to process:
mapping between a user input space of an input unit and an hierarchical structure of digital data; and
recognizing a layer corresponding to the user input space and performing data navigation.

8. The user interface system according to claim 7, wherein the hierarchical structure of the digital data is formed of two or more depths,
wherein the user input space is divided into two or more fields in accordance with the hierarchical structure of the digital data,
wherein the mapping between the user input space of the input unit and the hierarchical structure of the digital data is configured to:
respectively match depths of the hierarchical structure with the divided fields of the user input space.

9. The user interface system according to claim 8, wherein the user input space is divided into two or more columns, or two or more rows in accordance with a navigation axis of a user's input.

10. The user interface system according to claim 8, wherein the recognizing of the layer corresponding to the user input space and the performing of the data navigation is configured to:
perform the data navigation in the layer corresponding to one of fields in regard to a user's input that is introduced in the one of the fields of the user input space.
